# EUROPEAN PATENT APPLICATION

(11) **EP 3 124 936 A1**
(43) Date of publication of application: **01.02.2017**
(21) Application number: 16181565.9
(22) Date of filing: 27.07.2016
(51) Int. Cl.: G01L 9/00, G01L 13/02, G01L 19/00, G01L 19/04

(54) **DIFFERENTIAL PRESSURE SENSOR**

(30) Priority: 27.07.2015 DE 102015112228
(71) Applicant: Gealan Formteile GmbH, 95145 Oberkotzau (DE)
(72) Inventor: SAUNUS, Christian, 08223 Grünbach (DE); PÖHLMANN, Thomas, 95332 Helmbrechts (DE); GRÜN, Jörg von der, 95111 Rehau (DE); GERSTNER, Woldemar, 95030 Hof (DE); MÜLLER, Lutz, 08543 Pöhl (DE); BUHEITEL, Christian, 95111 Rehau (DE)
(74) Representative: Fleuchaus, Michael A.

(57) **Abstract**

A device (100) for measuring the pressure of a fluid comprising a mantle region (200) defining an fluid conduit (210), a detection system (600) comprising a measurement element (300) and a target member (500), wherein at least a portion of the measurement element (300) is arranged inside the fluid conduit (210), the measurement element (300) comprising a connection region (310) being affixed to the mantle region (200), and wherein the target member (500) is arranged inside the fluid conduit (210) in a fixed position with respect to the measurement element (300), the measurement element (300) having a first external surface (320) and a second external surface (330), wherein the first (320) and the second (330) external surfaces are arranged substantially opposite to one another, and at least one position sensor (400) for evaluating the position of the target member (500) along a locating path (L), wherein the position sensor (400) is arranged outside the fluid conduit (210) in a fixed position with respect to the connection region (310), and wherein at least a portion of the measurement element (300) is elastically deformable along a deforming direction (D) by a deforming force acting on the measurement element (300), the deforming force being generated by a difference between the local pressure of the fluid at the first external surface (320) and the local pressure of the fluid at the second external surface (330), and the position of the target member (500) along the locating path (L) with respect to the position sensor (400) depends on the deforming force.

## Description

The present invention is directed to the technical field of pressure measurement, in particularto the technical field of differential pressure measurement. More particularly, the present invention relates to a device for measuring the differential pressure of a fluid in a fluid conduit, e.g. in a hydraulic circuit.

Devices for measuring the differential pressure of a fluid in a fluid conduit are known in the prior art. Such devices often comprise mechatronic sensors for measuring the differential pressure of a fluid, said sensors being arranged so as to be in contact with the fluid. More specifically, at least some of the components of the mechatronic sensors are arranged inside the fluid conduit and are thus often wired or otherwise coupled to an output device arranged outside the fluid conduit.

Therefore, known measuring devices often have the disadvantage that at least portions of the measurement or electronic components have to be sealed fluid tight, which increases complexity and costs of such devices and also reduces their reliability. Also, in pressurized systems, sealing elements are often prone to failure.

It is an object of the present invention to provide a device for measuring the pressure of a fluid, in particular a differential pressure, the device at least partially overcoming the drawbacks of the prior art devices. In particular, the invention seeks to provide improved, easy to maintain and reliable pressure measurement devices.

These objects are solved by a device according to claim 1. Embodiments of the device according to the present invention are subject matter of the dependent claims.

Accordingly, the present invention refers to a device for measuring the pressure of a fluid. The pressure of the fluid may be a static, a dynamic, and/or a stagnating pressure of the fluid, wherein the stagnating pressure is the sum of the static and of the dynamic pressure. In particular, the device according to the present invention is configured to measure the differential pressure of a fluid.

According to the invention, a fluid may for instance be a gas, a liquid, or a liquid-gas-phase.

The device according to the present invention comprises a mantle region, which for example may be at least a portion of a pipe and/or a casing. The mantle region defines a fluid conduit, which in particular is a region internal to the mantle region. The fluid conduit may e.g. be a portion of the interior space of the elements of a hydraulic circuit and/or at least a portion of the interior space of a hydraulic reservoir. The fluid conduit according to this description may be a space inside of which a fluid is in a semi-static condition, ie. there need not be a continuous flow through said conduit.

Further, the device according to the present invention comprises a detection system comprising a measurement element and a target member, wherein the target member is arranged inside the fluid conduit in a fixed position with respect to the measurement element.

At least a portion of the measurement element, e.g. the entire measurement element, is arranged inside the fluid conduit. Moreover, the measurement element comprises a connection region, the connection region being affixed to the mantle region. The connection between the connection region and the mantle region may be a positive fit (e.g. a clamped fit, a riveted fit, a snap-fit, and the like), a non-positive fit (e.g. a screwed fit and the like), and/or a material fit (e.g. a glued fit, a soldered fit, a welded fit, and the like). In particular, the connection between the connection region and the mantle region may be an integral connection, such as, e.g. created by multi-component injection orthe like.

The measurement element has a first external surface and a second external surface. The first and the second external surfaces are arranged substantially opposite to one another, i.e. the first and the second external surface in two substantially opposite directions. The first and the second surface extend along a first and a second extension direction, respectively. Also, the first and the second extension direction may be substantially parallel to one another.

Furthermore, the device according to the present invention comprises at least one position sensor for evaluating the position of the target member along at least a substantially pre-defined locating path. In particular, the position sensor may allow for evaluating the position of the target member inside a portion of the fluid conduit. The locating path may in particular be a substantially straight line but can also be a curved line.

For example, the position sensor may be a proximity sensor, which is able to detect the position of the target member over a certain distance without having to establish any mechanical contacts with the target member. In particular, the position sensor may be a proximity sensor selected from a group comprising capacitive sensors, inductive sensors, photoelectric sensors, or combinations thereof.

The position sensor is arranged outside the fluid conduit in a fixed position with respect to the connection region. In particular, the position sensor may be arranged at the mantle region.

At least a portion of the measurement element, is deformable, in particular elastically deformable, along a deforming direction. The deformation of said part of the measurement element is responsive to a deforming force acting on the measurement element. In particular, the deforming force is directed along a force direction, which is substantially not perpendicularto the deforming direction.

The deforming force is generated by at least a differential pressure at the measurement element. The differential pressure at the measurement element is in particular the difference between the local pressure of the fluid at the first external surface and the local pressure of the fluid at the second external surface. In particular, the deforming force is the sum of the forces generated by the pressure of the fluid at the external surfaces of the measurement element and/or of the detection system.

Finally, the position of the target member along the locating path with respect to the position sensor depends on the deforming force, e.g. said position may be determined by the deforming force alone or also be influenced by other parameters, such as Temperature. Said position allows for determining the deforming force, and thus the differential pressure at the measurement element. In embodiments of the invention, other parameters, such as Temperature may also be accounted for in determining the deforming force.

The differential pressure at the measurement element may also allow for determining a volume flow rate of the fluid and/or a pressure drop in a hydraulic circuit, such as in the case of a hydraulic circuit of a heating system.

Preferably, the mantle region of the device of the invention is made of a hard plastic component, such as plastic materials with relatively good resistance to plastic and elastic deformation. For instance, said hard plastic component may be a rigid material comprising polymers such as polyurethane, polyethylene, polypropylene, polyvinyl chloride, nylon, acrylonitrile, or combinations thereof.

In an embodiment of the invention, the measurement element according to the present invention is a membrane, e.g. a substantially two-dimensional membrane. The elastic membrane preferably comprises a border region, the border region comprising the connection region. In particular, the membrane is deformable along at least the deforming direction.

For example, if the membrane has a disk shape, the border region is a circular ring segment at the outside of the disk. Deformation of the membrane would preferably be along a direction perpendicular to the disk. Preferably, the membrane may, at least in part, be composed of a plastic component and/or of a metallic component. If made from a metallic component, the thickness of the membrane is chosen to be small enough to allow sufficient elasticity under normal working conditions.

The membrane may be formed of several components of different elasticity so that, for example, an inner disk of the membrane is made of a stiffer material whereas the outer ring of the membrane is made of a more elastic material. This way, substantially the entire inner disk of the membrane will be deflected under the deformation force in a substantially parallel movement. In the above, neither the disk nor the ring may be required to be circular in shape but can have any non-circularshape and need not be planar.

For purposes of this invention disclosure, the term "elastic plastic components" denotes preferably plastic materials with high elasticity. An elastic plastic component is in particular an elastomer comprising polymers selected from a group consisting of polyurethane, polyethylene rubber, silicone, polyvinyl chloride, ethylene-vinyl acetate, natural rubber, or combinations thereof.

In an embodiment of the device according to the present invention, the detection system is fluid tight, e.g. the detection system does not allow fluid to pass through it. For example, the detection system does not allow fluid to pass from one chamber of the fluid conduit to a second chamber of the fluid conduit which chambers are separated by the fluid tight detection system.

To achieve this, preferably, the connection between the mantle region and the connection region is fluid tight. For example, the connection between the mantle region and the connection region is a liquid tight fitting, which may e.g. comprise sealing elements (e.g. a sealing layer) and/or sealing materials (e.g. silicone and the like) arranged between the connection region and the mantle region. Preferably, the connection between the mantle region and the connection region is sealed by a pressing force compressing the elastic membrane against the mantle region(s).

Accordingly, the membrane and/or the detection system constitute a fluid tight separator separating two volumes of the fluid conduit. In such configuration, the device according to the present invention allows e.g. for measuring the difference between the pressures, e.g. the static pressures, of the fluid(s) contained in the two volumes of the fluid conduit.

Moreover, such embodiment may be used to measure the pressure loss along a hydraulic circuit, in particular along a hydraulic circuit of a heating system where a first section of the heating system is connected to the first volume and a second section of the heating system is connected to the second volume, without any substantial energy loss, since the membrane and/orthe detection system constitutes a fluid tight sealing between the segments of the hydraulic circuit connected to the two respective volumes. Thus, measurement of the pressure loss is performed without substantially altering the hydraulic circuit and thus the presence of the device does not modify substantially the hydraulic properties of the hydraulic circuit in any substantial way. The measurement of the pressure drop between the segments of the hydraulic circuit corresponds in substance to the determination of a substantially static pressure difference between the two segments.

In a further embodiment of the device according to the present invention, at least a portion of the border region may not be part of the connection region and/orthe detection system may be at least transiently fluid permeable, e.g. it allows the fluid to pass through it at least under predefined conditions. For example, such fluid passage can be implemented to be dependent on the fluid pressure, wherein a fluid passage would only happen if the differential pressure between the local pressure at the first surface and the local pressure at the second surface exceeds a certain threshold. As such, the fluid passage would be in the form of a check valve, which may be implemented by a suitable configuration of the elastic component.

For instance, the membrane may comprise a hole, or a plurality of holes, which allow for a passage of limited amounts of fluid. The number, the distribution, and the shape of said holes may be designed so as to optimize the precision and/or the sensitivity of the device according to the requirements. Alternatively or in conjunction with the above, the connection between the mantle region and the connection region may be fluid permeable in a similar manner, ie. a valve-type permeability may be implemented by a suitable configuration of the elastic component.

This way, flow across the membrane may be determined which allows for determination of further fluid parameters, such as viscosity, or alternatively, dynamic pressure changes may be determined substantially irrespective of any static pressure differences.

In an embodiment of the device according to the present invention, the measurement element extends along a longitudinal direction. The longitudinal direction forms a first angle with the deforming direction, e.g. the longitudinal direction and the deforming direction are not substantially parallel to each other.

In particular, the measurement element may be bendable along the deforming direction. Moreover, the first and the second external surfaces may extend along the longitudinal direction, e.g. the first and the second extension direction may be substantially parallel to the longitudinal direction.

For example, if the mantle region is a pipe extending along a third extension direction, the longitudinal direction forms an angle with the third extension direction, e.g. the longitudinal direction and the third extension direction are not substantially parallel to each other.

This embodiment of the device allows for measuring the dynamic differential pressure of the fluid contained in a hydraulic circuit without substantially altering the hydraulic circuit itself. Further, the flow of the fluid in the hydraulic circuit may be determined substantially without affecting the hydraulic properties of the hydraulic circuit.

In an embodiment of the present invention, the position sensor is an inductive sensor and the target member is a metallic, magnetic or a magnetisable element.

In particular, the target member may be composed at least in part of a conductive material, wherein the conductive material may be selected from a group comprising metals, electrically conductive plastic components and combinations thereof. For example, the electrically conductive element may comprise a metallic element that may be attached to the measurement element by a positive fit, a force fit or a material fit. Further, the target member may be composed of a plastic component comprising metallic particles which may be co-injected together with the plastic component of the measurement element. This way, a measurement element having an integral target member may be formed.

Alternatively, the position sensor may be a capacitive sensor and the target member may preferably be formed of an electrically conductive element or a dielectric element. In particular, a dielectric element may be composed at least in part of a dielectric material, for instance a dielectric plastic material. For example, the dielectric element comprises a material of a dielectric constant other than the fluid or the mantle regions dielectric constant.

In an embodiment of the invention, the device may include two or more sensors which are preferably attached to opposite sides of the device, and wherein the two or more sensors are arranged so as to each sense the position of the target member along the locating path with respect to the respective position sensors. The measurements of the multiple sensors can then be combined to determine a resulting position of the target member along the locating path with a higher accuracy and redundancy, as well as under the elimination of interfering factors, such as temperature dilation of the material forming the mantle portion or mantle portions.

In embodiments with multiple sensors, the sensors may be of the same type, e.g. multiple inductive sensors, but may also be of different types so as to further eliminate perturbations of various nature, e.g. electromagnetic perturbations, and further improve the accuracy and the reliability of the measurement.

In an embodiment of the present invention, the position sensor comprises a first coil electrically connected to a first electric circuit. The first electric circuit may be assembled on a printed circuit board and/or may be an integrated circuit. Moreover, the position of the target member along the locating path with respect to the position sensor is evaluated by measuring at least an electrical quantity of the first electric circuit.

More specifically, in this case the electric current in at least a portion of the first electric circuit and/or the potential between two points in the first electric circuit depends on the position of the target member with respect to the first coil. For example, if the first electric circuit is a resonant circuit, a variation of the position of the target member with respect to the first coil will dampen the electric current and/or the potential in the first electric circuit thus producing a detectable signal for further processing.

In an embodiment of the device according to the present invention, the at least one position sensor has an operating region with at least an operating direction, wherein the operating direction and the locating direction are substantially non-perpendicular to each other.

In particular, the operating direction is preferably the direction along which the position sensor is best suitable to evaluate the position of the target member.

For example, if the mantle region is a pipe extending along the third extension direction, the operating direction of the location sensor may extend at least along the third extension direction, e.g. the extension direction and the operating direction may be substantially parallel to one another.

In this embodiment, the position sensor allows to measure deforming forces non-perpendicular to the flow of the fluid inside the fluid conduit, e.g. to measure the pressure along the pipe extending along the third extension direction.

For example, the position sensor may comprise a first coil, which in this case may be a substantially flat and round spiral coil with a given diameter. In this case, the operating direction is substantially perpendicularto the first coil.

Moreover, the target member may comprise at least one first region, which may be a circular disk having a first outer surface, the first outer surface having a given target diameter. Moreover, the first outer surface is substantially perpendicularto the deformation direction.

The target diameter may be substantially equal to the coil diameter and the thickness of the first circular region may be greater than or equal to 30µm. Preferably, this target member is made of a foil or, e.g. by sputtering or other metal deposition.

The first coil and the first region are arranged substantially opposite each other, in particular the first coil is arranged substantially opposite the first outer surface. Therefore the deformation direction and the operating direction are substantially parallel to each other, e.g. they are coincident.

In this embodiment, the differential pressure at the measurement element induces a deformation of the membrane along the deformation region, which modifies the position of the target member and thus of the first region along the deformation direction and thus along the operating direction. A variation of the position of the target member, e.g. of the first region, with respect to the first coil and along the operating direction triggers a variation of the electric current and/or of the potential in the first electric circuit, the latter allowing for determination of the position of the target member with respect to the position sensor along the operating direction, which thus coincides with the locating path.

For example, the position sensor may comprise the first coil, which in this case is a second substantially flat coil. Moreover, the first coil should not have a substantial circular symmetry, e.g. it should not be round. For instance, the first coil could be a substantially triangular or a substantially rectangular spiral, or it may have the form of a substantially elongated ellipsis. In this case the operating direction may be substantially parallel to the first coil. For instance, if the coil is a triangular or an elliptical spiral, the operating direction may be parallel to one of the heights of the first coil or to one of the axes of the first coil, respectively.

Moreover, in this case the detection system and the position sensor are arranged with respect to each other in such a way that the deformation direction and the operating direction are substantially parallel to each other, e.g. they are coincident.

The differential pressure at the measurement element induces a deformation of the membrane along the deformation region, which modifies the position of the target member and thus of the first region along the deformation direction and thus along the operating direction.

A variation of the position of the target member with respect to the first coil and along the operating direction triggers a variation of the electric current and/or of the potential in the first electric circuit, the latter allowing for determination of the position of the target member with respect to the position sensor along the operating direction, which thus coincides with the locating path.

In another embodiment of the present invention, the position sensor comprises at least a first electric circuit and a capacitive element electrically connected thereto. Moreover, the capacitive element and the target member constitute a capacitor. Further, the position of the target member along the locating path with respect to the position sensor is evaluated by measuring at least an electrical quantity of the first electric circuit.

More specifically, the electric current in at least a branch of the electric circuit and/or the potential between two points in the electric circuit depend on the capacitance of the capacitor, which in turn depends on the position of the target member with respect to the capacitive element. Therefore, the position of the target member with respect to the position sensor in effect influences at least an electrical quantity of the electric circuit.

In an embodiment of the device according to the present invention, the target member is affixed, e.g. releasably affixed, to the measurement element.

The connection between the target member and the measurement element may be a positive fit (e.g. a clamped fit, a riveted fit, a snap-fit, a bolted fit and the like), a non-positive fit (e.g. a screwed fit and the like), and/or a material fit (e.g. a glued fit, a soldered fit, a welded fit, and the like).

The measurement element and the target member may be produced independently from one another and assembled to form the detection system. This may increase the number of possible uses of the measurement element. In particular, the same type of measurement element may be used in two different embodiments of the device, embodiments which have different types of locations sensors and thus may require different types of target members.

Alternatively, the target member may be integral with the measurement element, e.g. the measurement element may comprise the target member, ie. the target member may be embedded in the measurement element, orthe target member may be a surface element of the measurement element. The target member may be implemented as a portion of the measurement element having mechanical, electromagnetic, or optical properties deviating from the remaining portions of the measurement element. The target member may also be implemented as a surface component of the measurement element and either be attached to the measurement element or be integral with it.

In another embodiment of the device according to the present invention, the measurement element comprises a target region forming a part of the measurement element, wherein the target member is affixed to the target region.

In particular, at least part of the target region may be composed by a third plastic component, wherein the third plastic component comprises a hard plastic component. Moreover, said plastic component may be a plastic component suitable for a plastic coating process such as the ABS plastic coating process.

In an embodiment of the present invention, the measurement element and/or the detection system are produced using a multi-component injection moulding process, a metal insert injection moulding process, a metallic coating process, and/or a film back injection moulding process.

For instance, the membrane according to the present invention may be produced using a two-component injection moulding process. More specifically, the two-component injection moulding process may comprise the injection moulding of a hard plastic component and the injection moulding of a soft plastic component, wherein the hard plastic component and the soft plastic component compose the target region and the elastic region, respectively.

Moreover, if the target region is composed by a plastic material and the target member is composed by a metallic component, the detection system may for instance be produced via a metal coating process, wherein the target region is coated by the target member.

In an embodiment, the device according to the present invention comprises processing means connected, e.g. electromagnetically connected, to the position sensor. In particular, the connection between the processing means and the position sensor may be achieved using wired or wireless connections.

The processing means receive an output signal of the position sensor as a first input and determines the differential pressure at the measurement element by way of determination of the position of the target member along the locating path. Said determination accounts for at least a mechanical property of the measurement element (e.g. elasticity, stiffness, and the like), a geometrical property (e.g. shape, dimensions and the like) of the target member, an electromagnetic property (e.g. magnetic permeability, magnetic susceptibility, relative permeability, and the like) of the target member, and/or an electromagnetic property (e.g. inductance and/or capacitance of the components of the first electric circuit) of the position sensor.

The processing means may comprise at least a processor (e.g. a central processing units, a digital signal processor and the like) to process the first input and possibly other inputs received by other sensors connected with the processing means. However, analog electronic circuits may also be used for determining the differential pressure at the measurement element by way of determination of the position of the target member along the locating. The processing means may further comprise an output interface to deliver information concerning the position sensor and/or the differential pressure at the measurement element.

The determination of the differential pressure at the measurement element may e.g. be achieved by using a computational algorithm implemented in the processor, wherein the computational algorithm depends at least on the on the first input and preferably accounts for at least a mechanical property of the measurement element. The determination of the differential pressure at the measurement element may be achieved by using a characteristic curve of the position sensor, i.e. curve which allows for associating the first input to the corresponding differential pressure at the measurement element. In this case, the shape of the characteristic curve of the position sensor depends on at least a mechanical property of the measurement element.

In a further embodiment, the device according to the present invention comprises at least one temperature sensor arranged inside the fluid conduit and/or on the mantle region. The at least one temperature sensor is connected, e.g. electromagnetically connected, to the position sensor or the processing means.

The processing means receive an output signal of the at least one temperature sensor either directly or indirectly as a second input and the determination of the differential pressure at the measurement element is based on the second input signal, e.g. on the temperature measured in proximity of the at least one temperature sensor.

For example, the device according to the present invention may comprise a first and a second temperature sensor having the aforementioned features and located in two different positions with respect to the measurement element so that a temperature in a first volume of the device is measured, as well as a temperature in a second volume. For instance, the first temperature sensor may be arranged in proximity of the first external surface and the second temperature sensor may be arranged in proximity of the second external surface.

In this case the determination of the differential pressure at the measurement element may also be based on the second input signal providing information about the fluid temperatures in the area of the first temperature sensor and of the second temperature sensor. In particular, said determination may also account for differences between multiple second input signals, e.g. a temperature gradient across the measurement element.

It is realized that the temperature and in particular different temperatures may have effects on the mechanical properties of the measurement element and thus by measuring such temperatures and accounting for them in the course of the determination of the target member position along the locating path, inaccuracies and non-linearities of the device output may be prevented.

The device according to the present invention may be used as an element of a hydraulic circuit, in particular of a heating hydraulic circuit. In particular, the device according to the present invention may be used to measure the pressure loss along a hydraulic circuit of a heating system. The measurement of a pressure loss along a heating hydraulic circuit is in fact crucial for an efficient control of heating systems, for example to avoid potentially dangerous and energy-consuming overheating of the heating system.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- Fig. 1a: is a schematic view of a mantle component of the mantle region of a first embodiment of the device according to the present invention;
- Fig. 1b: is a cross sectional view of the mantle component of the mantle region of the first embodiment of the device, wherein the cross sectional view is along the 1-1 line of Fig. 1a;
- Fig. 2a: is a schematic view of the detection system of the first embodiment of the device;
- Fig. 2b: is a cross sectional view of the detection system of the first embodiment of the device, wherein the cross sectional view is along the 1-1 line of Fig. 2a;
- Fig. 3a: is a schematic view of the first embodiment of the device;
- Fig. 3b: is a cross sectional view of the first embodiment of the device, wherein the cross sectional view is along the 1-1 line of Fig. 3a;
- Fig. 4: is a diagram of a hydraulic circuit comprising a device according to the present invention;
- Fig. 5: is a cross sectional schematic view of a second embodiment of the device according to the present invention;
- Fig. 6: is a cross sectional schematic view of third embodiment of the device according to the present invention;
- Fig. 7: is a cross sectional schematic view of a fourth embodiment of the device according to the present invention.

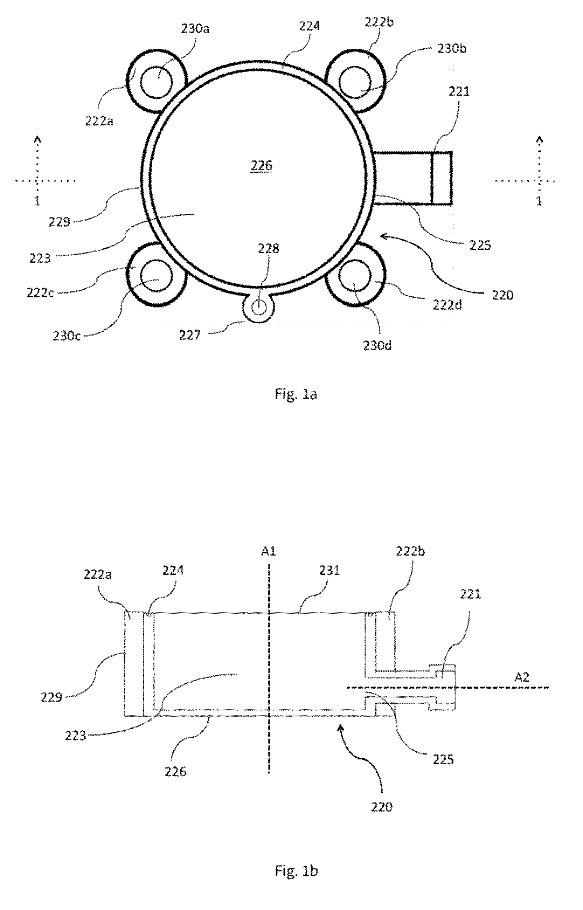

In a first embodiment of the device according to the present invention, the mantle region 220 comprises a first and a second mantle component 220, which are substantially identical to the mantle component 220 depicted in Fig. 1a and Fig. 1b.

The mantle component 220 comprises a cylindrical volume ortank 223 with a given first axis A1. The cylindrical tank 223 comprises a lateral surface 229, a substantially circular base 226 and a circular opening with substantially the same dimensions of the circular base 226. Said opening is arranged opposite the circular base 226. A circular groove 224 is arranged along the border 231 of the circular opening, with a given distance with respect to the first axis A1.

The cylindrical tank is connected to an at least partially cylindrical conduit 221, which extends along a second axis A2 substantially perpendicular to the first axis A1. This connection is achieved via a connection opening 225, which allows fluid to communicate between the cylindrical conduit 221 and the cylindrical tank 223.

The mantle component 220 comprises four substantially identical substantially cylindrical hollow elements 222a-d, wherein each cylindrical hollow elements defines a connecting duct 230a-d. The four hollow elements 222a-d are connected with the lateral surface 229 of the cylindrical tank 223. The hollow elements 222a-d are disposed symmetrically with respect to the cylindrical tank 223 and are arranged in such a way that the axes of the hollow elements 222a-d are substantially parallel to the first axis A1.

Furthermore, the mantle component 220 comprises a substantially cylindrical alignment component 227. The cylindrical alignment component 227 comprises a substantially circular base and a substantially circular opening, the circular opening having substantially the same dimensions of said circular base. An alignment pin 228 protrudes from the circular base of the alignment component 227 and is arranged substantially at the center of said circular base.

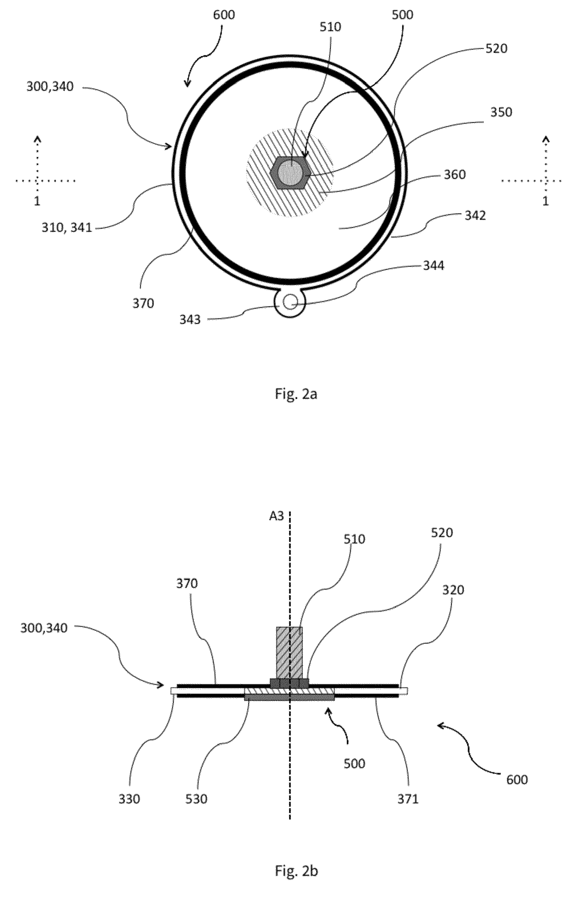

The detection system of the first embodiment of the device according to the present invention is depicted in Fig. 2a and Fig. 2b. The detection system 600 is fluid tight and comprises the measurement element 300, and the target member 500.

The measurement element 300 is an elastic, membrane 340 comprising a first substantially circular portion 342 and a second substantially circular portion 343. Moreover, it comprises a ring shaped border 341, which comprises the connection region 310. The first circular portion 342 comprises a connecting hole, which is arranged substantially at the center of the first circular portion 342. Moreover, the first circular portion 342 comprises a first external surface 320 and a second external surface 330, which are opposite to each other and perpendicular to a third axis A3, which passes through the centerofthe first circular portion and is perpendicular to the membrane 340.

A first 370 and a second 371 substantially circular protrusion protrude from the first 320 and the second 330 external surface, respectively. The center of the first 370 and the second 371 circular protrusions substantially coincide with the center of the first circular portion 342. Moreover, the radius of the first 370 and of the second 371 circular protrusions is substantially equal to the distance between the circular groove 224 and the first axis A1 of the mantle component 220, see Fig. 1a and 1b.

Moreover, the first circular portion 342 comprises the target region 350, which is an annulus of the first circular portion 342. The target region 350 is composed by the third plastic component, which comprises a hard plastic component. Furthermore, the first circular portion 342 comprises the elastic region 360, which is an annulus of the first circular portion 342 arranged substantially at the center of the first circular portion 342. The elastic region 360 is composed by the second plastic component, which comprises an elastic plastic component.

The second circular portion 343 comprises an alignment hole 344, which is arranged substantially at the center of the second circular portion 343. The form and the dimensions of the alignment hole 344 substantially conform to the form and the dimensions of the alignment pin 228 of the mantle component 220 depicted in Fig. 1a.

A metallic target member500 is arranged substantially at the center of the first circular portion, in contact with the target region 350. An exemplary target member 500 comprises a metallic pin 510, extending snuggly through the connecting hole of the first circular portion 342.

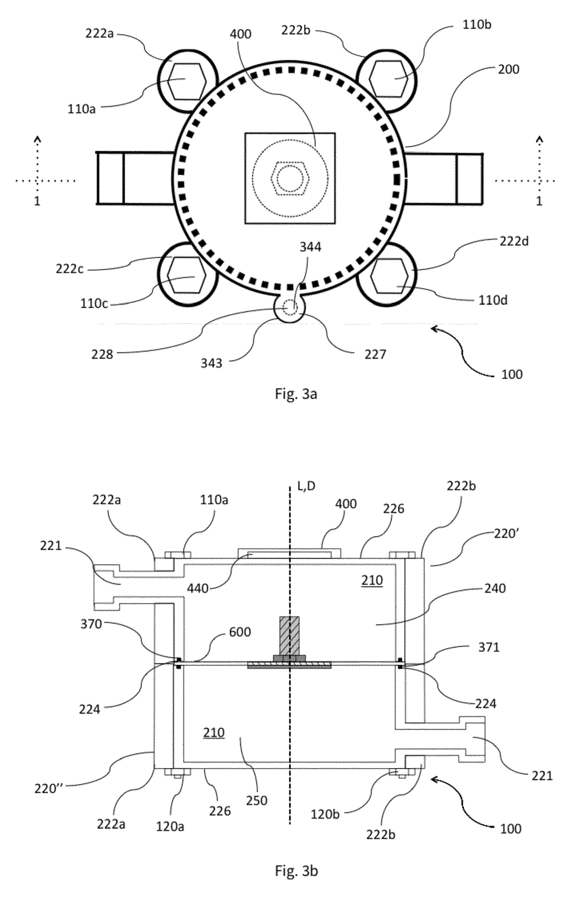

The target member500 is arranged substantially at the center of the first circular portion, in close contact with the target region 350. The target member and the first circular portion 342 define a fluid tight connection between the target member 500 and the measurement element 300. More specifically, the pin engages the washer 530, the connecting hole of the first circular portion 342 and the nut 520, as best shown in Fig. 1b. The shaft of the bolt is directed along the third axis A3. Fig. 3a and Fig. 3b depict the first embodiment of the device 100 according to the present invention. The mantle region 200 comprises the first 220' and the second 220" mantle component, which are arranged in such a way that the first axis A1 of the first mantle component 220' coincides with the first axis A1 of the second mantle component 220".

The axes of each hollow elements 222a-d of the first mantle component 220' coincides with the axes of the corresponding hollow elements of the second mantle component 220". Moreover, the axis of the cylindrical alignment component 227 of the first mantle component 220' coincides with the axis of the cylindrical alignment component 227 of the second mantle component 220".

The border 231 of the opening of the first mantle component 220' is arranged in the proximity of the border 231 of the opening of the second mantle component 220" to build the fluid conduit 210.

Furthermore, the cylindrical conduit 221 of the first mantle component 220' and the cylindrical conduit 221 of the second mantle component 220" are arranged substantially diametrically opposite to each other with respect to the cylindrical volume/tank 223 of the first 220' and to the cylindrical volume/tank 223 of the second mantle component 220". The aforementioned cylindrical conduit 221 may e.g. allow for fluidly connecting the device 100 with other hydraulic components (not shown) via e.g. pipes, in orderto allow fluid communication between the device 100 and said hydraulic components.

The first 220' and the second 220" mantle components are connected via four substantially identical bolted connections. Each bolted connection is defined by a connecting bolt 110a-d, by a connecting nut 120a-d, by one of the four connecting duct 230a-d of the first mantle component 220', and by one of the four connecting duct 230a-d of the second mantle component 220'. More specifically, the connecting bolt 110a-d engages the two aforementioned connecting ducts 230a-d and the connecting nut 120a-d to build a fluid-tight bolted connection.

While a bolted connection between the first 220' and the second 220" mantle components is shown, any other connection such as a material fit, e.g. by friction welding or hot plat welding, a force fit, e.g. by clamping, and/or a positive fit, such as by a holding pawl or the likes is possible. Preferably, the detection system 600 and, in particular it's measurement element 300, e.g. the connecting region 310 of the membrane 340 is grouted between the first 220' and the second 220" mantle components.

The target member 500, the elastic region 360, and the target region 350 are arranged inside the fluid conduit in such a way that the third axis A3 coincides with the first axis A1 of the first 220' and with the first axis A1 of the second 220" mantle component.

The connection region 310 is in contact with both the border 231 of the opening of the first mantle component 220' and the border 231 of the opening of the second mantle component 220' to build a fluid-tight connection between the mantle region 200 and the measurement element 300.

More specifically, the first circular protrusion 370 builds a substantially positive connection with the circular groove of the first mantle component 220', while the second circular protrusion 371 builds a substantially positive connection with the circular groove of the second mantle component 220". In this case, the detection system 600 constitutes a fluid tight wall dividing the first fluid conduit in a first volume 240 and in a second volume 250.

Moreover, the alignment pin 228 of the first mantle component and the alignment pin 228 of the second mantle component engage the alignment hole 344 of the second circular portion 343 of the measurement element 300.

The position sensor 400 is connected to the first mantle component 220', and is in contact with the base 226 of the first mantle component 220'. In particular, the position sensor 400 may be an inductive sensor. The position sensor 400 comprises the first coil 440, said coil 440 being electrically connected to the first electric circuit (not shown), which is e.g. a resonant circuit. The first coil 440 is a substantially flat, substantially round spiral perpendicular to the third axis A3. Further, the first coil 440 and the metallic washer 530 are arranged substantially in front to each other.

A substantially identical position sensor (not shown), or a position sensor of different type may be connected to the second mantle component 220" substantially opposite the position sensor 400 relative to the detection system 600 for interacting with the position sensor 400 in determining the position of the target member 500 along the locating path (L) while being deflected by a difference in local pressures acting on the first 320 and the second external surface 330 of the measurement element 300. Such configuration is also preferable, but not necessary, in cases where temperature sensors are provided in the area of the volume/tank 223 of the first 220' and to the cylindrical volume/tank 223 of the second mantle component 220" so as to determine the temperature of the fluids in these respective tanks. Such temperature values can then serve to calibrate the measurements of the one or multiple positions sensors, e.g. by accounting for thermal dilation, and thus render position measurements of the target memberto an even higher level of accuracy.

The difference between the pressure of the fluid at the first external surface 320 (e.g. of the fluid in the first volume 240) and the pressure of the fluid at the second external surface 330 (e.g. of the fluid in the second volume 250) induces a deformation of the membrane along the third axis A3. Therefore, the deformation direction D substantially coincides with the third axis A3 and thus with the first axis A1 of the first 220' and with the first axis A1 of the second 220" mantle component. Thus the deformation of the membrane modifies the position of the position of the target member 500, e.g. of the washer 530, along the third axis A3.

A variation of the position of the target member 500, e.g. of the washer 530 with respect to the first coil 440 and along the third axis A3 triggers a variation of the electric current and/or of the potential in the first electric circuit (not shown). The latter variation allows for evaluating the position of the target member 500 with respect to the position sensor 400 along the third axis A3, which thus may coincide with the locating path L.

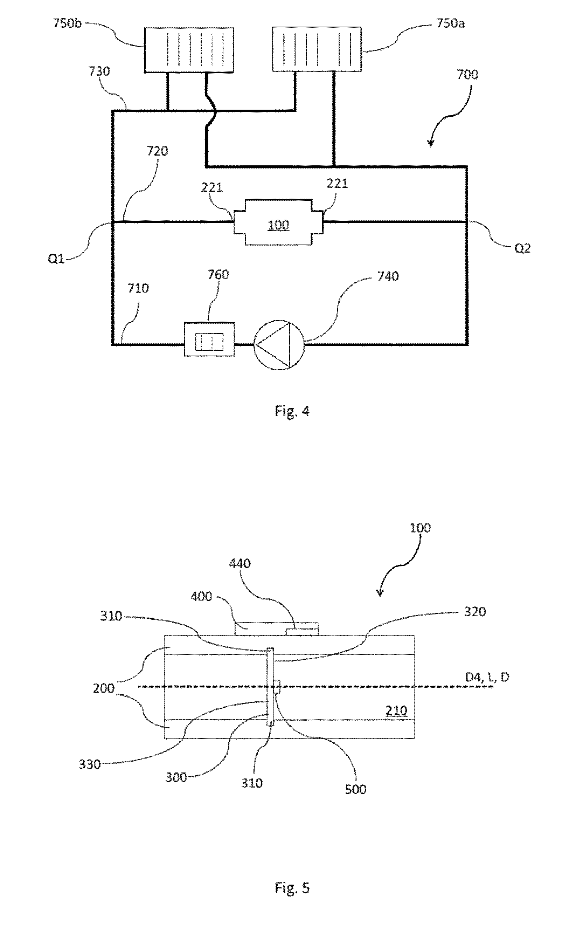

Figure 4 illustrates an exemplary us of a device of the present invention in a diagram of a hydraulic circuit 700 comprising the first embodiment of the device according to the present invention. The hydraulic circuit 700 comprises a first 710, a second 720, and a third section 730.

The first section comprises a hydraulic pump 740 and a burner 760, which heats a fluid. The third section 730 comprises two heat exchangers 750a 750b, which e.g. may be radiators for domestic heating. The second section 720 is connected in parallel with the first 710 and the third 730 section and comprises the first embodiment of the device 100 according to the present invention. More specifically, the device 100 is fluidly connected to the pipes of the first section via the cylindrical conduit 221 of the first mantle component 220' and the cylindrical conduit 221 of the second mantle component 220'.

The device 100 according to the present invention is able to measure the pressure loss in the hydraulic circuit 700 caused by the components of the hydraulic circuits 700. More specifically, the device 100 is able to measure the difference between the pressure of the fluid in the first volume 240 and the pressure of the fluid in the second volume 250 which are, respectively, in fluid connection with the flow and the return of the heating system. This pressure difference is substantially equal to the pressure difference between the endpoints Q1, Q2 of the third branch. This measurement of the pressure loss is performed without substantially altering the hydraulic properties of the hydraulic circuit.

In hydraulic systems of heating installations, the measurement of the pressure difference between the endpoints Q1, Q2 of the third branch, ie. the flow and the return is used to control the burner and the pump and to avoid potentially dangerous and energy-consuming overheating of the hydraulic system.

For example, if all the heat exchangers 750a 750b are turned off, the volume flow rate of the third section 730 will substantially vanish and the pressure difference between the endpoints Q1, Q2 of the third branch will increase overtime. The device 100 according to the present invention allows e.g. a control system (not shown) for detecting this behavior and for controlling it. For example, the control system may regulate, e.g. turn off, the burner760 and/orthe hydraulic pump 740 in orderto avoid the overheating of the hydraulic system.

Fig. 5 is an exemplary cross sectional view of a second embodiment of the device according to the present invention. The mantle region 200 is a pipe extending along a fourth extension direction D4 defining a substantially cylindrical fluid conduit 210.

The measurement element 300 is a substantially two-dimensional membrane 340, which is substantially perpendicular to the fourth extension direction D4. The border region 341, of the membrane substantially coincides with the connection region 310. Moreover, the connection between the mantle region 200 and the connection region 310 is fluid tight. Furthermore, the target member 500 is affixed to the first external surface 320 of the measurement element 300.

The position sensor 400 is affixed to the mantle region 200 and in contact therewith. In particular, the position sensor 400 may be an inductive sensor. The position sensor 400 comprises the first coil 440, electrically connected to the first electric circuit (not shown), which is e.g. a resonant circuit.

The first coil is a substantially flat spiral, wherein said spiral should not have a substantial circular symmetry, e.g. it should not be round. For instance, said coil could be a substantially triangular or a substantially rectangular spiral, or it may have the form of a substantially elongated ellipsis. In this case, the operating direction is substantially parallel to the first coil. Moreover, the first coil is substantially parallel to the fourth extension direction D4.

The differential pressure at the measurement element induces a deformation of the membrane along the fourth extension direction D4. Therefore, the deformation direction D substantially coincides with the fourth extension direction D4 and is thus parallel to the first coil and to the operating direction. Moreover, the deformation of the membrane modifies the position of the target member 500 along the fourth extension direction D4 and thus along the operating direction.

A variation of the position of the target member 500, with respect to the first coil 440 and along the operating direction triggers a variation of the electric current and/or of the tension in the first electric circuit. The latter variation allows for evaluating the position of the target member 500 with respect to the position sensor 400 along the operating direction, which thus coincides with the locating path L. Therefore, the locating path L is substantially parallel to the first coil 440.

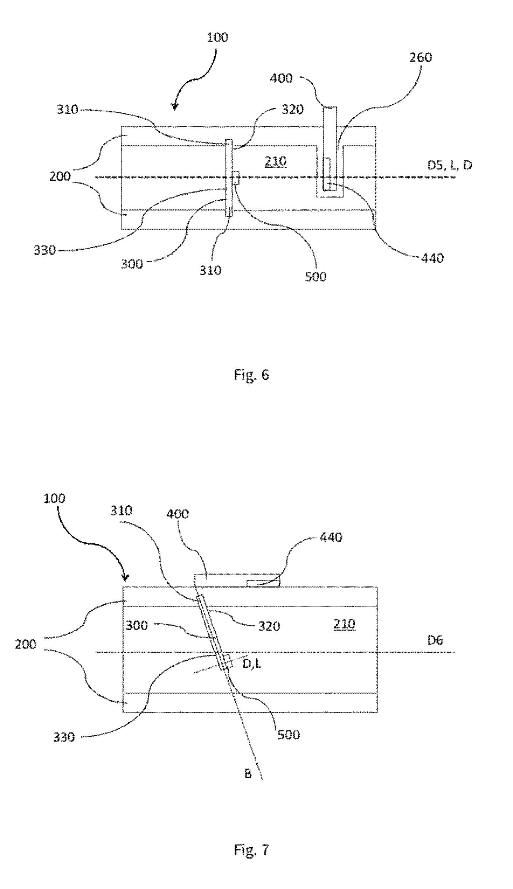

Fig. 6 is a cross sectional view of a third embodiment of the device 100 according to the present invention. The mantle region 200 is a pipe extending along a fifth extension direction D5 defining a substantially cylindrical fluid conduit 210. Moreover, the mantle region comprises a recess 260 extending in a direction, which is substantially perpendicular to the fifth extension direction D5.

The measurement element 300 is a substantially two-dimensional membrane 340, which is substantially perpendicular to the fifth extension direction D5. The border region 341, of the membrane substantially coincides with the connection region 310. Moreover, the connection between the mantle region 200 and the connection region 310 is fluid tight.

The target member500 is affixed to the first external surface 320 of the measurement element 300. The target member 500 comprises the first circular region with the first outer surface. The outer surface is substantially perpendicular to the fifth extension direction D5.

The position sensor 400 is inserted in the recess 260 and is in contact with the mantle region 200. In particular, the position sensor 400 may be an inductive sensor. The position sensor 400 comprises the first coil 440, electrically connected to the first electric circuit (not shown), which is e.g. a resonant circuit.

The first coil 440 is a substantially flat, substantially round spiral perpendicularto the fifth extension direction D5. Further, the first coil 440 and the first circular region, e.g. the first outer surface, are arranged substantially in front to each other. Therefore the fifth extension direction D5 and the operating direction are substantially parallel to each other, e.g. they are coincident.

The differential pressure at the measurement element induces a deformation of the membrane along the fifth extension direction D5. Therefore, the deformation direction D substantially coincides with the fifth extension direction D5 and thus with the operating direction. Moreover, the deformation of the membrane modifies the position of the robe element along the fifth extension direction D5.

A variation of the position of the target member 500, e.g. of the first circular region with respect to the first coil 440 and along the fifth extension direction D5, i.e. along the operating direction, triggers a variation of the electric current and/or of the tension in the first electric circuit. The latter variation allows for evaluating the position of the target member 500 with respect to the position sensor 400 along the operating direction, which thus coincides with the locating path L.

Fig. 7 is a cross sectional view of a fourth embodiment of the device 100 according to the present invention. The mantle region 200 is a pipe extending along a sixth extension direction D6 defining a substantially cylindrical fluid conduit 210.

The measurement element 300 extends along the longitudinal direction B. In particular, the first 320 and the second 330 external surfaces extend along the longitudinal direction B, which is not parallel to the sixth extension direction D6.

Moreover, the measurement element 300 is bendable along at least the deforming direction, which is substantially perpendicular to the longitudinal direction, i.e. the first angle (not shown) is substantially a right angle. Furthermore, the target member 500 is affixed to the first external surface 320 of the measurement element 300.

The position sensor 400 is affixed to the mantle region 200 and in contact therewith. In particular, the position sensor 400 may be an inductive sensor. The position sensor 400 comprises the first coil 440, electrically connected to the first electric circuit (not shown), which is e.g. a resonant circuit. The first coil 440 is a substantially flat, round spiral and is substantially parallel to the sixth extension direction D6.

The differential pressure between the pressure at the measurement element induces a deformation of the membrane along the deformation direction D. A variation of the position of the target member 500 with respect to the first coil 440 and along the deformation direction D triggers a variation of the electric current and/or of the tension in the first electric circuit. The latter variation allows for evaluating the position of the target member 500 with respect to the position sensor 400 along the deformation direction D, which thus may coincide with the locating path L.

| | | | |
|---|---|---|---|
| 100 | Device | 360 | Elastic region |
| 110a-d | Connecting bolt | 370 | First circular protrusion |
| 120a-d | Connecting nut | 371 | Second circular protrusion |
| 200 | Mantle region | 400 | Position sensor |
| 210 | Fluid conduit | 440 | First coil |
| 220 | Mantle component | 500 | Target member |
| 221 | Cylindrical conduit | 510 | Metallic pin |
| 222a-d | Hollow elements | 520 | Nut |
| 223 | Cylindrical tank | 530 | Washer |
| 224 | Circular groove | 600 | Detection system |
| 225 | Connection opening | 700 | Hydraulic circuit |
| 226 | Base | 710 | First section |
| 227 | Alignment component | 720 | Second section |
| 228 | Alignment pin | 730 | Third section |
| 229 | Lateral surface | 740 | Hydraulic pump |
| 230a-d | Connecting ducts; | 750a-b | Heat exchangers |
| 231 | Border | 760 | Burner |
| 300 | Measurement element | A1 | First Axis |
| 310 | Connection region | A2 | Second Axis |
| 320 | First external surface | A3 | Third Axis |
| 330 | Second external surface | B | Longitudinal direction |
| 340 | Membrane | D4 | Fourth extension direction |
| 341 | Border region | D5 | Fifth extension direction |
| 342 | First circular portion | D6 | Sixth extension direction |
| 343 | Second circular portion | L | Locating path |
| 344 | Alignment hole | Q1 | Endpoint |
| 350 | Target region | Q2 | Endpoint |

## Claims

1. Device (100) for measuring the pressure of a fluid comprising:
a mantle region (200) defining an fluid conduit (210);
a detection system (600) comprising a measurement element (300) and a target member (500), wherein at least a portion of the measurement element (300) is arranged inside the fluid conduit (210), the measurement element (300) comprising a connection region (310) being affixed to the mantle region (200), and wherein the target member (500) is arranged inside the fluid conduit (210) in a fixed position with respect to the measurement element (300);
the measurement element (300) having a first external surface (320) and a second external surface (330), wherein the first (320) and the second (330) external surfaces are arranged substantially opposite to one another; and
at least one position sensor (400) for evaluating the position of the target member (500) along a locating path (L), wherein the position sensor (400) is arranged outside the fluid conduit (210) in a fixed position with respect to the connection region (310),
**characterised in that**
at least a portion of the measurement element (300) is elastically deformable along a deforming direction (D) by a deforming force acting on the measurement element (300), the deforming force being generated by a difference between the local pressure of the fluid at the first external surface (320) and the local pressure of the fluid at the second external surface (330), and
the position of the target member (500) along the locating path (L) with respect to the position sensor (400) depends on the deforming force.

2. Device (100) according to claim 1, wherein the measurement element (300) is a membrane (340), wherein the membrane (340) comprises a border region (341), which comprises the connection region (310).

3. Device (100) according to claim 2, wherein the connection region (310) coincides with the border region (341), wherein the detection system (600) is fluid tight, and wherein the connection between the mantle region (200) and the connection region (310) is fluid tight.

4. Device (100) according to claim 2, wherein at least a portion of the border region (341) is not part of the connection region (310) and/orthe detection system (600) is fluid permeable and/or the connection between the mantle region (200) and the connection region (310) is at least transiently fluid permeable, so that, preferably, fluid may permeate if the difference between the local pressure of the fluid at the first external surface (320) and the local pressure of the fluid at the second external surface (320) exceeds a predefined threshold.

5. Device (100) according to claim 1, wherein the measurement element (300) extends along a longitudinal direction (B), and wherein the longitudinal direction (B) forms a first angle with the deforming direction (D).

6. Device (100) according to one of the preceding claims, wherein the at least one position sensor (400) has a operating region with an operating direction, wherein the locating path (L) is substantially non-perpendicularto the operating direction.

7. Device (100) according to one of the preceding claims, wherein:
• the position sensor (400) is an inductive sensor and the target member (500) is a magnetic element; or
• the position sensor (400) is a capacitive sensor and the target member (500) is an electrically conductive or a dielectric element.

8. Device (100) according to one of the preceding claims, wherein the target member (500) is affixed to the measurement element (300) orthe target member (500) is integral with the measurement element (300).

9. Device (100) according to one of the previous claims, wherein the measurement element (300) and/or the detection system (600) are produced using a multi-component injection moulding process, a metal insert injection moulding process, a metallic coating process, and/or a film back injection moulding.

10. Device (100) according to one of the preceding claims, wherein at least a part the target member (500) and/or the measurement element (300) is composed of an electrically conductive plastic component.

11. Device (100) according to one of the preceding claims further comprising processing means connected to the position sensor (400),
wherein the processing means receive an output signal of the position sensor (400) as a first input, and, from said signal, determines the difference between the local pressure of the fluid at the first external surface (320) and the local pressure of the fluid at the second external surface (330), and
wherein said determination is based on at least a mechanical property of the measurement element (300), a geometrical property of the target member (500), an electromagnetic property of the target member (500), and/or an electromagnetic property of the position sensor (400).

12. Device (100) according to claim 11, further comprising at least one temperature sensor arranged inside the fluid conduit (210) and/or on the mantel region (200) and connected to the processing means, wherein the processing means receive an output signal of the at least one temperature sensor as second input, and wherein said determination is further based on the second input signal.
